# EUROPEAN PATENT APPLICATION

(11) **EP 0 730 006 A2**
(43) Date of publication of application: **04.09.1996**
(21) Application number: 96301317.2
(22) Date of filing: 27.02.1996
(51) Int. Cl.: C08L 95/00, C09D 195/00

(54) **In service vulcanizing membrane and method for making same**

(30) Priority: 28.02.1995 US 396400
(71) Applicant: W.R. Grace & Co.-Conn., New York New York 10036 (US)
(72) Inventor: Wiercinski, Robert Alan, Lincoln, Massachusetts 01773 (US); Connolly, John Joseph, Boston, Massachusetts 02132 (US)
(74) Representative: Senior, Alan Murray

(57) **Abstract**

A pressure-sensitive waterproofing membrane which exhibits good adhesion and flow resistance when applied to a substrate, such as a roof top. Good flow resistance is derived from vulcanization of the pressure-sensitive waterproofing composition after it is applied to the roof top and allowed to cure under the effect of ambient sunlight energy. An exemplary method of the invention for making the field vulcanizing waterproofing membrane comprises the steps of providing a first component that comprises a bitumen and a vulcanizable elastomer, providing a second component that comprises a vulcanizing agent operative to vulcanize the elastomer when mixed therewith, providing an in-line mixer operative to mix the first and second components together without substantially vulcanizing them, and extruding the mixed components through a sheet die to form a layer of vulcanizable waterproofing composition that is capable of having substantially uniform thickness and of being self-adherent to a rooftop surface.

## Description

### FIELD OF INVENTION

This invention relates to a rubberized bitumen composition for making a waterproofing membrane, and more particularly to a field-curing rubberized bitumen membrane and to a method for making the same.

### BACKGROUND OF THE INVENTION

Waterproofing membranes are known that comprise a carrier support sheet and a pre-formed layer of waterproofing composition superimposed thereon. The adhesive composition may typically comprise a mixture of asphalt, process oil, synthetic elastomer, and fillers. These sheet-like membranes are applied as an underlayment, for example, in roof tops to prevent or minimize the penetration of moisture due to ice dams and wind-driven rain.

### SUMMARY OF THE INVENTION

The present invention provides a pressure-sensitive waterproofing composition which exhibits good adhesion when applied to a substrate, such as a roof deck, and good flow resistance at the upper range of elevated temperatures to which the roof top may be subjected. Good flow resistance is derived from vulcanization of the pressure-sensitive waterproofing composition after it is applied to the roof top and allowed to cure under the effect of thermal sunlight energy. Before vulcanization, the waterproofing composition is tacky and adheres readily to the roof top surface. However, if the composition were vulcanized before application, then the adhesion would be otherwise reduced. An exemplary composition comprises a rubberized bitumen comprising bitumen and a vulcanizable elastomer; and a vulcanizing agent operative to vulcanize the elastomer; and the rubberized bitumen and vulcanizing agent, after mixing together, comprising a solid at ambient temperature.

An exemplary method of the invention for making the field vulcanizing waterproofing membrane comprises the steps of providing a first component that comprises a bitumen and a vulcanizable elastomer or rubber, providing a second component that comprises a vulcanizing agent operative to vulcanize the elastomer when mixed therewith, providing a mixer operative to mix the first and second components together, and extruding the mixed components through a sheet die or non-pressurized coater to form a layer of waterproofing composition that is capable of having substantially uniform thickness and of being self-adherent at ambient temperatures. In preferred embodiments, the bitumen-elastomer component is heated to a temperature of at least 200°F, and preferably to 250-275°F, such that, when continuously pumped by a separate pipeline into a continuous mixer and mixed with a vulcanizing agent in the in-line continuous mixer, significant vulcanization of the bitumen-elastomer is avoided. The method thus is capable of making formulations with moderate to high levels of vulcanization ingredients which would not be processable if substantially vulcanized during processing. One advantage of the method is the maintenance of a low viscosity characteristic which can improve the manufacturing process rate and provide latitude in terms of the processing equipment chosen. Thus, good processability and tackiness are achieved without subsequent sacrifice of flow resistance.

The present invention also comprises a composition for a field-curing waterproofing membrane, as made by the process described above. An exemplary membrane thus comprises a carrier support sheet and, contiguous therewith and superimposed thereon, a pre-formed waterproof (ie., not water soluble) and waterproofing (ie., prevents water penetration into substrate to be protected) composition layer comprising a rubberized bitumen homogeneously intermixed with a vulcanizing agent operative to vulcanize said rubberized bitumen. In further embodiments, the pre-formed waterproof and waterproofing composition layer is pressure-sensitive, and, when vulcanized, exhibits 25% or less movement in a flow test when compared to an unvulcanized composition layer. The bitumen, elastomer, and vulcanizing agent form a waterproofing composition membrane layer which is a solid pressure-sensitive adhesive.

### BRIEF DESCRIPTION OF THE DRAWING

Fig. 1 is a side perspective view of an exemplary waterproofing membrane of the present invention having a field vulcanizable waterproofing composition layer;
Fig. 2 is a diagram of an exemplary method of the present invention for making a field vulcanizable composition for a waterproofing membrane; and
Fig. 3A and 3B are diagrams of a test for measuring flow resistance of vulcanized waterproofing compositions of the invention.

### DETAILED DESCRIPTION OF THE INVENTION

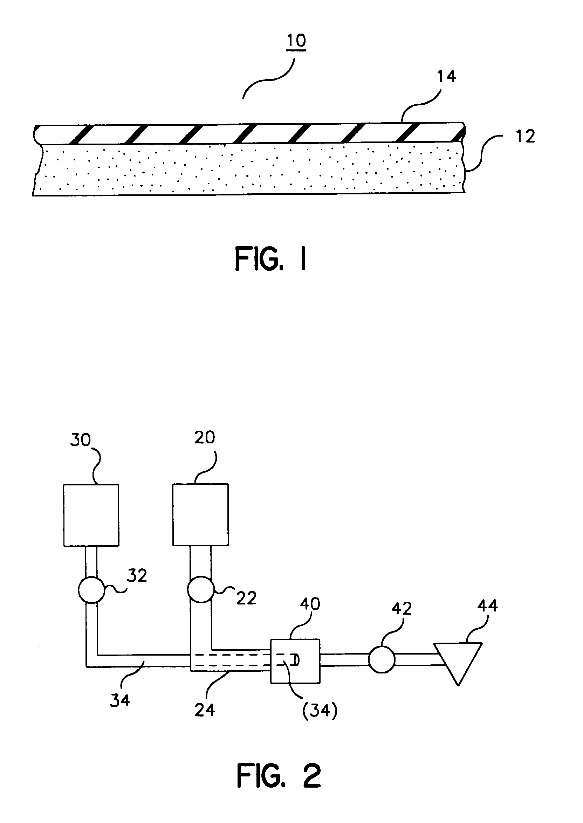

As seen in Fig. 1, an exemplary waterproofing membrane 10 of the invention comprises a pre-formed pressure-sensitive adhesive composition layer 12, preferably attached to a carrier support layer 14. In a preferred embodiment, the carrier support layer 14 comprises a plastic sheet comprising a polyolefin, such as polypropylene or polyethylene. A biaxially-oriented film of high density polyethylene is preferred. In other embodiments, other films, woven sheets, or non-woven sheets (ie., felts, mats) may be employed adjacent or on one side of the pressure-sensitive adhesive composition layer or embedded within the layer.

An exemplary adhesive composition layer 12 comprises a rubberized bitumen (e.g., a combination of bitumen and vulcanizable elastomer or rubber), and a vulcanizing agent operative to cure the elastomer when the adhesive composition layer 12 is installed on a roof top and exposed to thermal sunlight energy. Preferably, the adhesive layer 12 is pressure-sensitive in that it is self-adherent to substrates such as wood, concrete, metal, insulation board, or gypsum board at temperatures of 25°F and above. The membrane 10 may further comprise a protective release sheet layer (not shown) that is releasably adhered to the adhesive composition layer 12 on the side opposite the carrier support sheet 14. The release sheet may comprise a silicone coated paper or other release sheet material known in the art.

Fig. 2 illustrates an exemplary method for continuously making field curable adhesive composition layers that can be employed in the kind of waterproofing membrane laminate shown in Fig. 1. A first component 20 and second component 30 are each separately metered by pumps 22 and 32, respectively, and introduced by separate pipelines 24 and 34 into an in-line mixer 40 and extruded through a sheet die 44. The mixture is extruded through a sheet die 44 to form a waterproofing composition layer (12) having a substantially uniform thickness. The layer (12) can be directly extruded onto a release sheet, allowed to cool, and then laminated by the other adhesive composition layer side onto the carrier sheet 14. Preferably, a pump or metering pump 42 is employed to convey the mixture continuously from the in-line mixer 40 to the die 44.

The first component 20 comprising the bitumen and vulcanizable elastomer is heated to 200-375°F, and more preferably 250-275°F. The temperature range should be chosen such that the mixture is not substantially vulcanized during the manufacturing steps, as will be further discussed hereafter. The bitumen and elastomer may be selected from those known in the waterproofing art. For example, bitumen and elastomer combinations are disclosed in U.S. patent 4,172,830 (Rosenberg et al.); U.S. patent 4,396,665 (Rowe); U.S. patent 4,585,682 (Colarusso et al.); U.S. patent 4,595,636 (Wiercinski et al.); U.S. patents 4,992,334 and 5,028,487 (Kellett et al.); British patent GB 1,230,753 (Hurst); British patent GB 1,548,394 (Hurst); and Canadian patent 1,008,738 (E.R. Davis), all incorporated herein by reference. Preferably, the elastomer comprises butyl rubber, EPDM, natural rubber, nitrile rubber, polybutadiene, polychloroprene (neoprene), polyisoprene, acrylonitrile rubber, poly(block styrene-block butadiene), poly(block styrene-block butadiene-block styrene), styrene-butadiene rubber, or a mixture thereof. Optionally, the first component 20 may further comprise process oil, fillers such as calcium carbonate, plasticizers, and other additives known in the art.

The second component 30 comprises a vulcanizing agent that is operative to effectuate curing of the elastomer in the rubberized bitumen 20 when subjected to the ambient temperature of the rooftop environment. The "vulcanizing agent" 30 may comprise (1) a source of sulfur such as elemental sulfur or a sulfur donor group, preferably in combination with one or more accelerator groups and/or activator groups (which will be discussed further herein); or (2) a non-sulfur curative, including organic peroxides, metal oxides, and phenol-formaldehyde resins operative to cure the rubber used (e.g., neoprenes, butyl rubber, etc). Preferably, the flowable vulcanizing agent 30 further comprises a process oil or plasticizer. Accordingly, further exemplary methods comprise the step of providing a process oil in the vulcanizing agent 30 which is to be separately introduced into the in-line mixer 40. Process oil thus becomes part of, or serves as, the vehicle for the vulcanizing agent 30 before the in-line mixing step, as well as a part of the resultant unvulcanized and rubberized bitumen composition that is ultimately extruded through the sheet die 44.

A waterproofing membrane 10, such as shown in Fig. 1, in a roof assembly which may also comprise a deck, overlayment shingles, and some type of insulation may be subjected to upper range temperatures of approximately 140-220°F. The vulcanization agent 30 is chosen to effect a cure in this temperature range within a reasonable time period, such as several weeks or months after installation on the deck or roof assembly. A number of elastomers and vulcanizing agents are known and are disclosed, for example, in U.S. patents 5,242,970 (Davis); 4,778,852 (Futamura); and 4,514,442 and 4,462,875 (Crepeau), all incorporated by reference herein.

The vulcanizing agent preferably comprises a source of sulfur, such as elemental sulfur or a sulfur donor such as 4,4-dithiodimorpholine, 4-morpholinyl-2-benzothiazole disulfide, and thiurams such as tetramethylthiuram disulfide, tetraethylthiuram disulfide, tetrabutylthiuram disulfide, dipentamethylene thiuram tetrasulfide. Elemental sulfur and a sulfur dbnor may also be used in combination. The preferred range for each is 0.1-10.0 phr. A more preferred range for each is 1.0-3.0 phr. One or more accelerators is preferably used in combination with a source of sulfur to increase the reaction rate. Typical accelerators include: amines, dithiocarbamates, dithiophosphates, guanidines, organic peroxides, organic phosphorus, sulfenamides; thioureas, thiophosphates, and zinc isopropyl xanthate. The preferred range for each accelerator is 0.1-10.0 phr. A more preferred range is 1.0 and 3.0 phr. In addition, the vulcanizing agent may also comprise an activator such as zinc oxide and/or stearic acid. The activators facilitate vulcanization by forming rubber soluble complexes with the accelerators. The preferred range for each activator is 0.1-10.0 phr. A more preferred range is 1.0-5.0 phr.

In exemplary waterproofing compositions of the invention (such as in layer 12 of Fig. 1), the composition forms a solid at ambient temperature. Preferably, the formulation comprises 55.0-94.9% wt. bitumen or bitumen and oil, 5-30% wt. elastomer, and 0.1-10.0 phr of each ingredient (e.g., source of sulfur, accellerator, activator) in the vulcanizing agent. A preferred rubberized bitumen composition 20 comprises the following components (based on total weight solids): an oxidized bitumen (50-95%); aromatic process oil (0-40%); an SBS block copolymer elastomer (KRATON®)(5-30%); an optional filler (e.g., calcium carbonate, sand)(0-30%). A preferred vulcanizing agent composition 30 or paste can comprise the following ingredients (based on total weight solids in the paste): an aromatic process oil (36-84%); a dithiocarbamate (4-16%) or a thiuram (4-16%) or a benzothiazole (4-16%); sulfur (4-16%); zinc oxide (4-16%); and stearic acid (4-16%). The preferred mix ratio of the rubberized bitumen composition 20 to the vulcanizing agent 30 is about 33.3 parts by weight of the rubberized bitumen 20 to 1 part of the sulfur paste 30.

Thus, in an exemplary method, the first component 20 and second 30 components are continuously fed by metering pumps 22 and 32, at a predetermined rate which corresponds to the desired final proportion, through separate pipelines 24 and 34 into the continuous in-line mixer 40. The mixer renders a homogeneous combination of the two metered components 20 and 30 without causing substantial vulcanization of those intermixed components. The mixer 40 preferably requires minimal residence time within which to combine the components 20 and 30 into a homogeneous mixture. Suitable mixers include rotor stator mixers (such as that shown in Fig. 2) (e.g., Siefer, Dalworth) and single or twin screw extruders. Preferably, a metering pump 42 is used to convey the mixture under pressure to the sheet die 44. The mixture can then be extruded onto a continously advanced release sheet, such as siliconized or wax paper, allowed to cool, then laminated to a carrier support sheet of the kinds known in the waterproofing art. Preferred support sheets comprise biaxially oriented polyethylene film.

The first 20 and second 30 components are separately metered by pumps 22 and 32 into the mixer 40 using separate pipelines 24 and 34, which can be introduced at separate intake ports in the mixer 40, or, more preferably, by having one pipeline 34 encompassed within the other 24 at the point of entry into the mixer 40, or by having co-axially arranged pipelines at the point of entry. As shown more particularly in Fig. 2, the pipeline 34 for pumping the vulcanizing agent 30 is connected so that it is contained entirely within, and more preferably co-axial with, the pipeline 24 for pumping the bitumen/vulcanizable elastomer component 20 into the mixer. Fig. 2 also illustrates a further preferred embodiment wherein the vulcanizing agent pipeline 34 extends further than the other pipeline 24 into the mixer. The present inventors have discovered that by arranging the pipelines within each other, occlusion or blockage of the pipeline 24 for the bitumen-elastomer is minimized because the opportunity for vulcanization of the elastomer at the point it enters into the mixer is decreased. Extending the pipeline 34 for pumping the vulcanizing agent 30 into the mixer allows the vulcanizing agent to be introduced in the area of highest turbulence such that it is dispersed as quickly as possible.

Moreover, in preferred methods, each of the rubberized bitumen composition 20 and vulcanizing agent composition 30 are employed in a pump-flowable form, in contrast to being pumped as solid particles or powder form.

Further exemplary methods comprise the step of adjusting the speed of the mixer 40 in accordance with changes in the input rates of the two components 20 and 30. Thus, when the input rate (into the mixer 40) of the two components 20 and 30 are decreased, the speed of the mixer 40 is decreased. Conversely, when the input rate is increased, the mixer 40 speed is increased. The purpose of the mixer 40 speed adjustment is to avoid high levels of shear heating in the mixer 40 that would otherwise tend to cause vulcanization of the rubberized asphalt 20. Further exemplary methods of the invention can also achieve this purpose, such as by further comprising the step of adjusting the throughput rate of the pump 42 in response to changes in the speed of the in-line mixer 40.

A flow test method can be used for evaluating the resistance to flow of the reactive rubberized bitumen composition used in the roof top application. The test can be used determine the relative degree of crosslinking, such that a comparison can be readily appreciated between crosslinked rubberized bitumen and unvulcanized rubberized bitumen. The flow of crosslinked rubberized bitumen will be expected to be less than that of unvulcanized (uncrosslinked) material. Using the following tests, one may discern that when a vulcanizing agent is added to the unvulcanized rubberized bitumen of a commercially available product, and fully cured, the extent of adhesive flow is 25% or less than that of the unvulcanized adhesive composition. Accordingly, further membranes and methods of the present invention pertain to a rubberized bitumen and vulcanizing agent combination which, after mixing and exposure to roofing temperatures sufficient to accomplish significant cross-linking within the rubberized bitumen, demonstrates an increased flow resistance whereby adhesive flow is 25% or less when compared to the unvulcanized state. The test method is believed to be more realistic than ones based on tensile strength, modulus at certain degrees of elongation, measurement of elongation at break, hardness, or rheological measurements because it simulates adhesive flow (due to the effect of gravity) at a relatively high temperature.

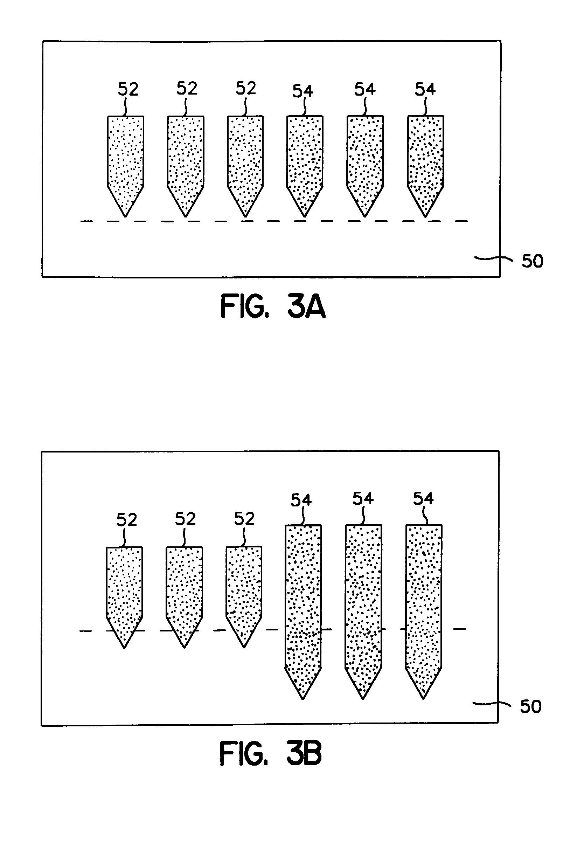

A rubberized bitumen composition is obtained by removing the material, using liquid nitrogen, from the carrier sheet of a waterproofing membrane laminate. The composition is placed into a template measuring 6 inches (long) by 6 inches (wide) by 0.04 inches (thickness), and then placed between sheets of siliconized polyethylene terephthalate mounted in a laboratory press between heated platens (220° F.). The maximum pressure exerted by the press must be sufficient to flatten the rubberized bitumen to the template thickness and should be held for 1 to 60 seconds. The sample is then cooled. With the release sheets in place, at least three samples can be punched from within the template area using a punch die having a 3 inch length and a 0.5 inch width. One end of the die should produce a squared end, and, at the opposite end, a centered 90 degree point, much in the same way that picket fences are shaped (See Fig. 3A). These samples are deemed to be essentially unvulcanized and are labeled as 54 in Fig. 3A.

A second sample is prepared as described above, up to the point where it is held in the press at 220°F. This same sample is then held in a 275°F press for 24 hours to effect vulcanization (if vulcanizable). The sample is cooled, then punched in the same way as described above. These samples are labeled as 52 in Fig. 3A.

As shown in Fig. 3A (before) and 3B (after), the samples (52 and 54) are mounted on a 12 inch x 12 inch 18 gauge galvanized steel plate 50. Before mounting of the samples, however, all oil and other contaminants should be removed from the steel plate using xylene or other solvents. The solvents should be allowed to evaporate fully from the plate. Then a horizontal line should be drawn four inches from the top of the plate. The release sheet is removed from one side of the picket fence-shaped samples, which are then adhered on their exposed side to the steel plate. The 90 degree point should be facing downwards. Care should be taken to avoid trapping air bubbles between the samples and the plate. A roller can be used to ensure good adhesion of the samples to the plate. The other release sheet is then removed.

The plate 50 is then placed into an oven and supported vertically such as by a rack. The oven should have a fan to ensure uniform temperature distribution. The oven temperature should be selected such that an unvulcanized rubberized bitumen 54 sample flows 0.25 - 3 inches in a 24 hour period. Average flow values for samples number 52 and 54 are compared (See Fig. 3B). The adhesive is deemed to be vulcanizable if the average flow for 52 is. 25% or less than the average flow for 54. Other adhesives are deemed conventional and are not covered by this art.

A test method can be implimented to ascertain the extent to which the rubberized asphalt composition layer of the membrane has a pressure-sensitive property for allowing adhesive mounting upon the roof top. The membrane with the carrier sheet supported pre-formed rubberized bitumen adhesive layer is placed, adhesive side first, onto a steel sheet. The sample is rolled to ensure full contact. After fifteen minutes (referred to as a "wet in" period), the sample is tested on an Instron Model 1000 or similar mechanical test device. One grip is attached to the carrier sheet of the membrane; another grip is attached on the steel sheet. *See e.g.*, ASTM D903 (1993). The force needed to pry the steel sheet from the sample is measured. Accordingly, the rubberized bitumen in its unvulcanized state, and when pre-formed as an adhesive layer on the carrier support sheet of the waterproofing membrane, should preferably have an adhesive bond strength, indicative of its pressure-sensitive adhesive characteristic, of at least 1.0 pound or greater per linear inch of width (PLI). This would be the force required to detach a one inch wide sample from the steel sheet at room temperature.

The foregoing discussion is provided for exemplary and illustrative purposes only and is not intended to limit the scope of the invention.

## Claims

1. A composition for a field-curing waterproofing membrane, comprising: a rubberized bitumen comprising bitumen and a vulcanizable elastomer; and a vulcanizing agent operative to vulcanize the elastomer; wherein the rubberized bitumen and vulcanizing agent, after mixing together, comprise a solid at ambient temperature.

2. A composition according to claim 1 wherein the rubberized bitumen comprises: 50 to 95% bitumen, 5 to 30% elastomer and 0 to 40% process oil based on the total weight of rubberized bitumen.

3. A composition according to claim 1 to 2 wherein the elastomer is butyl rubber, EPDM, natural rubber, nitrile rubber, polybutadiene, poly(block styrene-block butadiene), poly(block styrene-block butadiene-block styrene), polychloroprene, polyisoprene, or styrene-butadiene rubber.

4. A composition according to claim 1, 2 or 3 further comprising a filler in an amount from 0.1 to 30% based on total weight of rubberized bitumen.

5. A composition according to any one of the preceding claims wherein the vulcanizing agent comprises at least one source of sulfur which is elemental sulfur or a sulfur donor.

6. A composition according to claim 5 wherein the sulfur source is present in an amount from 0.1 to 10.0 phr (parts by weight per hundred parts of elastomer by weight).

7. A composition according to claim 6 wherein the vulcanizing agent further comprises at least one accelerator and/or one activator each in an amount from 0.1 to 10.0 phr.

8. A composition according to any one of the preceding claims which is formed into a layer and is attached to a coextensive carrier sheet support layer, the composition layer being pressure-sensitive and having a flow, when vulcanized, that is 25% or less than the flow of the composition layer in an unvulcanized state or in an as manufactured state.

9. A composition according to claim 8 wherein the composition layer, before vulcanization, has a pressure sensitive adhesive strength of at least 0.175 N/mm (one pound per linear inch of width) in accordance with ASTM D-903-93.

10. A method for making a field-curing waterproofing composition, comprising mixing together, in a mixer, a first component which comprises a bitumen and a vulcanizable elastomer and a second component which comprises a vulcanizing agent operative to vulcanize the elastomer when mixed therewith, and extruding the mixture through a forming device to form a layer of waterproofing composition having a substantially uniform thickness and pressure-sensitive adhesive characteristic.

11. A method according to claim 10 wherein the first component is heated to at least 93°C (200°F) before mixing with the second component.

12. A method according to claim 10 or 11 further comprising providing a first metering pump operative to feed the first component at a constant rate into the mixer, and a second metering pump operative to feed the second component at a constant rate into the mixer.

13. A method according to claim 12 further comprising the step of providing a third pump connected to the mixer and the sheet die, whereby the mixture of first and second components is fed into the sheet die.

14. A method according to claim 12 or 13 further comprising providing a pipeline from each of the metering pumps to the mixer, whereby a first pipeline is operative to convey the first component to the mixer and a second pipeline is operative to convey the second component to the mixer, one of the pipelines being contained within the other pipeline at the point where the pipelines are connected to the mixer.

15. A method according to any one of claims 10 to 14 further comprising extrusion coating the adhesive layer continuously onto a release sheet.

16. A method according to any one of claims 10 to 15 further comprising attaching the adhesive layer to a carrier support sheet to form a waterproofing membrane laminate.

17. A method according to any one of claims 10 to 16 wherein the first and second components, when mixed, comprise a composition according to any one of claims 1 to 9.

18. A method according to any one of claims 10 to 17 further comprising the step of providing a process oil in the second component.

19. A method according to any one of claims 10 to 18 further comprising the step of adjusting the speed of the mixer in response to a change in the rate at which the first and second components are provided into the mixer.

20. A field-curing waterproofing membrane comprising a carrier support sheet and, contiguous therewith and superimposed thereon, a pre-formed adhesive composition as defined in any one of claims 1 to 9 or obtainable by a method according to any one of claims 10 to 19.

21. A field-curing waterproofing membrane comprising a carrier support sheet and, contiguous therewith and superimposed thereon, a pre-formed waterproof and waterproofing composition layer comprising a rubberized bitumen homogeneously intermixed with a vulcanizing agent operative to vulcanize said rubberized bitumen when the membrane is installed upon a roof top and subjected to sunlight.
